Europäisches Patentamt

**European Patent Office**

**Office européen des brevets**

(19)

(11) Numéro de publication: **0 222 952**
**B1**

(12)

# FASCICULE DE BREVET EUROPEEN

(45) Date de publication du fascicule du brevet:
08.02.89

(51) Int. Cl.⁴: **G09B 15/06**

(21) Numéro de dépôt: 85402092.2

(22) Date de dépôt: 30.10.85

(54) **Dispositif pour la stabilisation des avant-bras en vue de faciliter l'acquisition de la technique pianiste et son perfectionnement.**

(43) Date de publication de la demande:
**27.05.87 Bulletin 87/22**

(45) Mention de la délivrance du brevet:
**08.02.89 Bulletin 89/6**

(84) Etats contractants désignés:
**AT DE GB**

(56) Documents cités:
**DE-A- 207 116**
**DE-A- 357 260**
**FR-A- 729 601**

(73) Titulaire: **Sogny, Michel Jean-Jaques, 18 Avenue Emile Deschanel, F-75007 Paris(FR)**

(72) Inventeur: **Sogny, Michel Jean-Jaques, 18 Avenue Emile Deschanel, F-75007 Paris(FR)**

(74) Mandataire: **Bonnetat, Christian et al, Cabinet PROPI Conseils 23 rue de Léningrad, F-75008 Paris(FR)**

## Description

La présente invention concerne un dispositif porteur et stabilisateur des avant-bras de l'exécutant en permettant un effet d'assistance pour faciliter l'acquisition de la technique pianistique et son perfectionnement.

Le dispositif selon l'invention sera plus particulièrement utile pour la pratique et l'éducation pianistique chez les adultes.

Or on sait que l'apprentissage et le développement de la pratique du piano chez les adultes présentent des problèmes spécifiques.

Lorsque l'apprentissage a pu débuter dès le plus jeune âge, il bénéficie déjà de la souplesse intellectuelle et de la facilité d'acquisition des réflexes; mais surtout les muscles porteurs des avant-bras peuvent s'adapter et se développer en fonction de la position spécifique et particulière des avant-bras lors de la pratique du piano qui est une position non seulement en porte-à-faux mais également position dans laquelle les muscles des doigts sont constamment sollicités pour la manœuvre rapide des touches.

De sorte que lorsque le piano est pratiqué et lorsque son enseignement progresse à partir des jeunes années, se développent les réflexes et automatismes qui commandent le maintien des avant-bras en position active à hauteur du clavier sans fatigue parallèlement à l'assouplissement des mouvements des doigts en vue des exercices eux-mêmes.

Il en va différemment lorsque la pratique ou l'éducation du piano est entreprise à un âge plus avancé, alors que les réflexes sont déjà largement acquis et fixés.

Dans ces conditions, l'élève ou l'exécutant se heurte à une difficulté particulière qui est celle de maitriser le maintien des avant-bras dans une position permettant aux doigts de répondre aux sollicitations nerveuses pour assurer les mouvements commandés pour la manœuvre des touches.

L'adulte n'ayant pas développé les muscles qui permettent d'assurer le maintien réflexe et automatique et surtout sans fatigue excessive des avant-bras en bonne position, asservie aux nécessités du mouvement digital, se trouve sujet et victime rapidement d'un effet de fatigue des avant-bras, fatigue consciente ou non mais qui se traduit par un phénomène de crispation physique entraînant par contrecoup une crispation psychologique liée aux difficultés inhérentes à tout apprentissage.

L'inventeur a prévu de remédier à cette difficulté particulière et inhérente à l'éducation pianistique des adultes par une méthode spécifique originale mettant en œuvre des exercices et travaux étudiés pour épargner au sujet tout phénomène négatif de refus ou de rejet, souvent inconscient, devant la difficulté matérielle d'une part et devant le caractère non directement valorisant et par conséquent le caractère fastidieux des "gammes" traditionnelles.

L'incitation artistique et intellectuelle que procure la méthode mise au point par l'inventeur doit cependant s'accompagner d'une assistance matérielle permettant de libérer l'exécutant ou l'élève du problème physique qu'il rencontre et qui est lié simplement à la force de la pesanteur; problème du maintien en bonne position des avant-bras pendant un temps nécessairement long, travail pour lequel les muscles du sujet n'ont pas été jusqu'alors préparés.

L'invention vise donc à réaliser un dispositif se combinant avec les méthodes artistiques et psychologiques mises au point par l'inventeur afin de permettre à l'élève de cheminer selon un parcours incitatif permanent évitant les difficultés artistiques ou intellectuelles et notamment l'aspect rébarbatif des exercices purement physiques tout en étant également assisté corporellement et soulagé de l'effort (tout à fait inutile sur le plan de l'éducation) lié au maintien des avant-bras en position de travail sur le clavier.

On comprend en effet que la tension musculaire nécessitée par le maintien prolongé des avant-bras accapare une partie de l'énergie de l'individu et parasite les manœuvres et l'acquisition de la souplesse sur le plan purement digital.

Un autre objet de l'invention, outre l'assistance et le soutien qu'il procure à l'avant-bras est de permettre au sujet de contrôler le mouvement de l'avant-bras par rapport au mouvement des doigts seuls.

En effet, lors de l'éducation pianistique les réflexes n'étant pas acquis, la tendance naturelle du sujet pour atteindre une touche est fréquemment d'assister la manœuvre du doigt par une manœuvre combinée de l'avant-bras qui se propulse de façon à faciliter (au moins dans un premier temps) la manœuvre de la touche recherchée.

Or, ce mouvement combiné de l'avant-bras et du doigt se révèle fréquemment contre-indiqué et ne correspond pas aux conditions favorables d'acquisition d'une vélocité et de dextérité au niveau du doigt; on comprend en effet que s'il peut paraître plus facile dans un premier temps au sujet de manœuvrer de façon concordante le bras et le doigt, une manœuvre localisée au niveau du doigt peut être exécutée beaucoup plus rapidement car elle implique un déplacement beaucoup plus limité et par conséquent la mise en œuvre d'une énergie réduite et le maintien de la main en position immédiatement disponible pour la manœuvre suivante, alors que le mouvement combiné doigts et avant-bras représente la mise en œuvre et le déplacement d'un ensemble beaucoup plus important qui doit revenir ensuite à sa position de départ avant de repartir pour la manœuvre suivante; les forces d'inertie qui contrarient le mouvement sont donc beaucoup plus importantes de sorte que globablement, même si dans un premier temps pour le sujet inexpérimenté la manœuvre paraît plus facile, il convient de contrôler ce réflexe pour réduire autant que possible la manœuvre des touches au déplacement lié à une dextérité essentiellement digitale.

Or, il est difficile pour le sujet de contrôler ce réflexe naturel et de limiter par conséquent le mouvement au seul doigt en contrôlant l'absence de déplacement ou un déplacement aussi limité que possible des avant-bras.

Cette action du doigt seule a aussi pour but de stimuler le développement de la musculature nécessaire à l'acquisition de la force et de l'indépendance de chaque doigt.

Enfin selon un dernier objet de l'invention, le dispositif permettra au sujet de contrôler d'une façon générale sa bonne position par rapport au clavier et le maintien des avant-bras dans la position active la plus appropriée par rapport à la manœuvre des touches.

A cet effet, l'invention concerne un dispositif stabilisateur des avant-bras en vue de l'assistance pour l'éducation et entraînement à la pratique du piano, constitué d'une surface longitudinale d'appui, disposé en porte-à-faux parallèlement et en deçà du clavier par rapport à l'exécutant, ladite surface étant apte à offrir un appui linéaire aux avant-bras lors de la manœuvre des touches par les doigts. Un tel dispositif est connu du document FR-A 729 601. D'après l'invention la surface prend appui latéralment sur les deux flancs du corps du piano et est montée mobile et déplaçable angulairement entre une position active, elle-même préréglée de façon ajustable, parallèle et en avant du clavier, et une position d'effacement par rapport au clavier. De préférence la surface d'appui est constituée par une rampe ou barre métallique formée par exemple d'un profil tubulaire de préférence cylindrique à section circulaire.

Par exemple la barre d'appui est constituée d'un profilé notamment métallique en forme générale de U dont la base linéaire rectiligne, constitue la partie longitudinale active positionnée parallèlement au clavier, les deux branches latérales étant en appui sur les flancs du piano par l'intermédiaire de moyens de fixation.

Selon une autre caractéristique, les moyens de fixation de la barre d'appui par rapport au piano, sont prévus avec des organes permettant le positionnement réglable de la barre d'appui par rapport au clavier.

Selon une forme de réalisation, la barre d'appui est montée mobile selon un mouvement angulaire de ses deux branches latérales tourillonnées sur les flans du clavier et les moyens de fixation sont constitués de bielles de soutien constituées d'un vérin rétractable par simple relèvement de la barre.

Selon une forme de réalisation plus particulière, la barre constituée d'un profilé tubulaire cylindrique comporte deux coussinets en forme de manchons eux-mêmes cylindriques montés coaxialement à coulissement sur la barre, chaque manchon étant apte à recevoir l'appui mobile d'un avant-bras du sujet.

Selon une variante, la barre constitue un rail de préférence cylindrique à section circulaire et elle est porteuse de deux chariots montés à coulissement et pourvus de moyens de déplacement tels que galets ou cages à billes portant sur lesdits rails.

Selon une autre caractéristique plus particulière les moyens d'appui mobiles des avant-bras portés par la barre, tels que les coussinets ou chariot sont montés coulissant sur la barre d'une part selon un mouvement longitudinal le long de la barre et d'autre part à rotation angulaire selon l'axe constitué par ladite barre.

Selon encore une autre caractéristique, les moyens d'appui mobiles tels que les coussinets ou chariot comportent extérieurement un matelas de préférence sous forme de manchon externe cylindrique, matelas réalisé en matériau élastiquement compressible tel qu'une mousse d'une matière synthétique et permettant l'appui et le repos confortable des avant-bras.

Enfin selon une dernière caractéristique plus particulière les moyens de fixation de la barre sont prévus avec des organes d'amortissement et de rappel élastiques permettant un mouvement limité de la barre sous la pression de l'utilisateur suivi du rappel de la barre vers sa position normale de repos.

D'autres caractéristiques et avantages de l'invention ressortiront de la description qui suit et qui est donnée en rapport avec quelques formes de réalisation de l'invention présentées à titre d'exemples non limitatifs.

La figure 1 représente une vue en perspective d'un piano droit pourvu du dispositif d'assistance et de stabilisation selon l'invention.

La figure 2 représente une vue en perspective du détail du clavier avec le dispositif stabilisateur en position active.

La figure 3 représente une vue schématique en élévation latérale d'un dispositif selon l'invention montrant une variante du système de fixation latérale.

La figure 4 montre une vue en coupe du système de stabilisation avec un chariot porteur monté sur cage à billes tandis que la figure 5 montre une vue en coupe du système de stabilisation porteur d'un coussinet formant manchon d'appui.

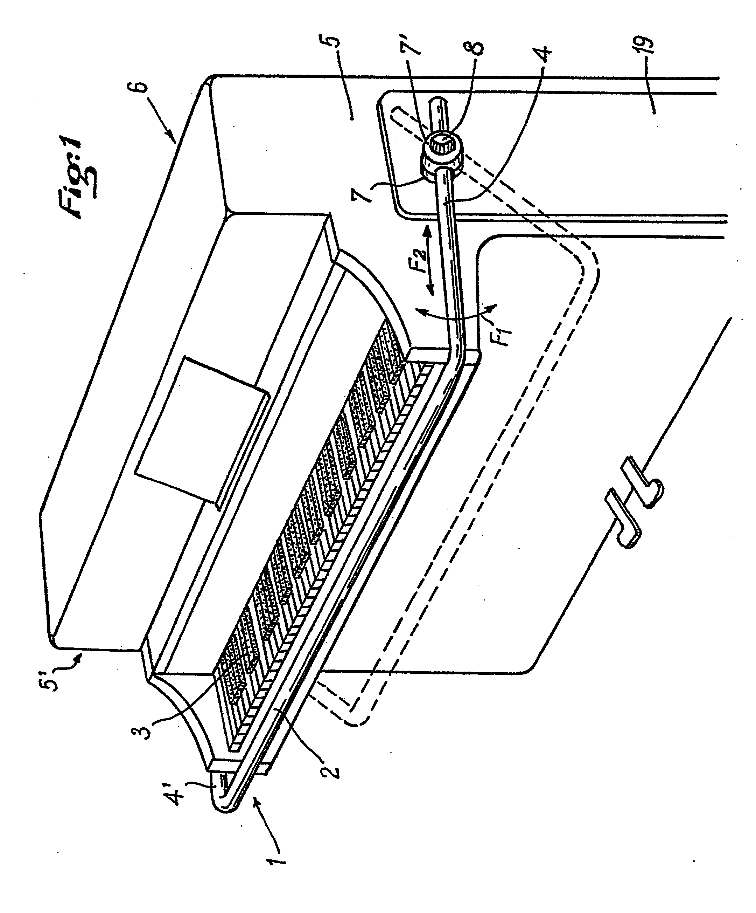

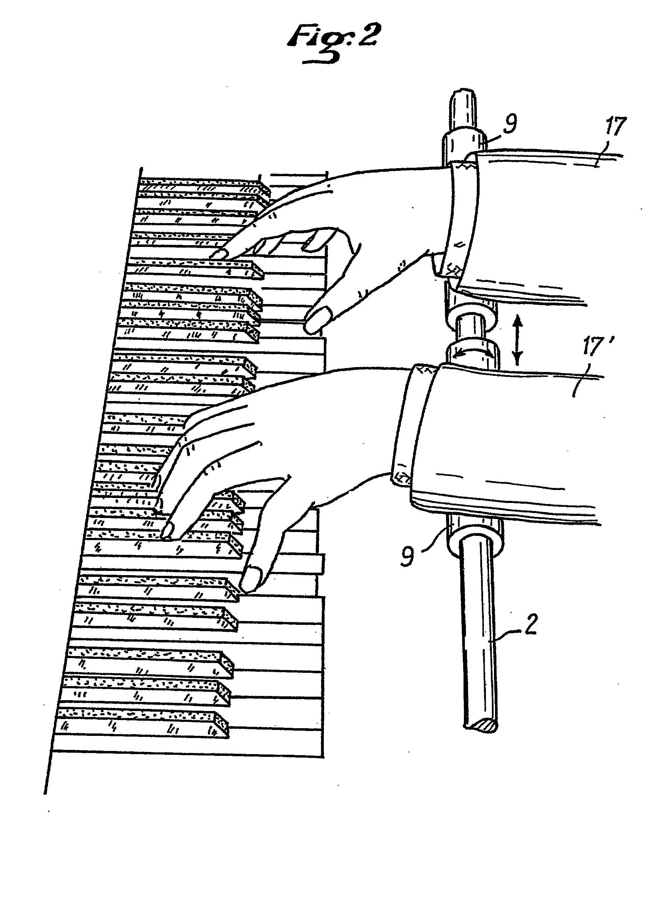

Selon les figures 1 et 2, on voit que le piano de type conventionnel reçoit ici la barre d'appui 1 qui est formée d'un profilé par exemple tubulaire à section cylindrique; ce type de profilé tubulaire à section cylindrique permettra d'obtenir un parcours rectiligne de la barre d'appui 1 sans risque de gauchissement ou de formation d'une flèche.

La barre d'appui est formée à partir d'un profilé tubulaire linéaire coudé de façon à constituer un organe en forme de U.

La base linéaire 2 de la barre d'appui est disposée en avant du clavier 3 et parallèlement à ce dernier tandis que les deux branches latérales 4, 4′ coudées à 90° viennent se positionner sur les flancs 5, 5′ du piano 6.

Selon l'exemple de la figure 1, la barre d'assistance et de stabilisation 1 est montée règlable en position et à cet effet la barre est par exemple engagée et maintenue par serrage entre deux blocs cylindriques de maintien respectivement 7 et 7′.

La manœuvre de la molette 8 permet d'assurer le serrage des deux blocs 7 et 7′ qui sont ajustables l'un par rapport à l'autre en emprisonnant la branche 4; on peut ainsi permettre de régler le positionnement de la barre 2 soit angulairement selon la flèche F1, soit en agissant sur l'écartement de la barre 2 par rapport au clavier selon la flèche F2.

On voit qu'il est ainsi possible de régler le positionnement de la barre de stabilisation et d'appui des avant-bras 2 par rapport au clavier en la mettant d'une part à bonne hauteur par rapport à ce dernier et dans une position d'éloignement correcte en fonction du degré d'avancement du sujet et de sa morphologie.

Selon la figure 1 on voit en pointillés la barre 2' en position d'effacement.

On comprend en effet que certains exercices doivent être pratiqués avec la barre de stabilisation en position tandis que dans d'autres cas il est souhaitable en fonction de l'évolution et de l'avancement dans la pratique d'effectuer un certain nombre de travaux et d'exercices sans l'utilisation de la barre de stabilisation. Celle-ci a pour objet essentiel de faciliter le travail technique préparatoire à l'exécution.

Dans le cadre du dispositif représenté à la figure 1, il est donc aisé d'agir sur la molette 8 pour permettre le déblocage de la barre et de l'amener par conséquent de la position en traits pleins 2 à la position effacée en traits pointillés 2'.

La vue de la figure 2 montre une variante de réalisation dans laquelle la barre est équipée de coussinets respectivement 9 et 9'.

Ces coussinets sont représentés en perspective.

L'exemple représenté à la figure 5 montre un coussinet d'appui qui est constitué d'un manchon cylindrique 10 formé essentiellement d'un corps en matière alvéolaire compressible par exemple un matelas cylindrique en matière synthétique.

Les sections respectivement du matelas en matière synthétique 10 et de la barre 2 sont prévues de façon à ce que l'alésage intérieur du coussinet viennent s'enfiler à frottement doux et sans force de friction sur le profil extérieur de la barre 2.

De préférence, l'alésage intérieur du coussinet 10 comporte lui-même un surfaçage ou revêtement 11 par exemple en matériau anti-adhérent tel qu'une résine fluorée (téflon) de façon à permettre un glissement doux sur la surface extérieure lisse de la barre 2, réalisée par exemple en aluminium ou en matériau inoxydable.

On comprend que dans ces conditions, on obtiendra un glissement extrêmement doux et sans force de frottement du coussinet 10 sur la barre 2 grâce au surfaçage intérieur à coulissement doux 11.

A l'extérieur du coussinet ou matelas en matière synthétique 10, on peut prévoir un revêtement par exemple sous forme d'une étoffe de velours ou autre permettant le repos confortable de l'avant-bras sur le matelas.

Dans cette forme de réalisation, on voit que le coussinet 10 va pouvoir coulisser longitudinalement le long de la barre 2 mais dans le même temps il peut pivoter angulairement selon la flèche F3 de la figure 5.

La figure 4 représente une variante de réalisation dans laquelle le coussinet est ici constitué d'un chariot mécanique formé d'une bague ou manchon métallique 13 montés à coulissement sur la barre 2 par l'intermédiaire d'un dispositif tel qu'une cage à billes 14; le frottement doux des billes 15, 15' sur la barre assure un glissement régulier de la bague extérieure 13 le long de la barre 2 en assurant comme précédemment le mouvement rectiligne et longitudinal dans le sens de la barre c'est-à-dire parallèlement au clavier d'une part mais également une possibilité de pivotement selon la flèche F4 de la figure 4.

Selon la figure 4 on voit que la bague ou manchon cylindrique comporte extérieurement un matelas en matériau synthétique 16 de forme cylindrique qui entoure la bague formant chariot 13 de façon à assurer le repos confortable des avant-bras.

On voit selon la figure 2 que les deux avant-bras 17, 17' du sujet sont ainsi portés sur les coussinets ou chariot 9, 9' repos confortable grâce à la matière synthétique formant matelas qui assure par conséquent un repos élastique des avant-bras et ces derniers se trouvent libérés de la pesanteur, les doigts étant ainsi directement disponibles pour recevoir intégralement la concentration et l'influx nerveux du sujet propre à assurer une plus grande mobilité.

Pareillement on voit selon la figure 2 que le sujet peut prendre conscience du positionnement de ses avant-bras par rapport au clavier grâce à la sensation d'appui que provoque la barre.

L'appui sur la barre, par l'intermédiaire des coussinets 9 et 9' est cependant un appui mobile et les deux coussinets peuvent se déplacer linéairement le long de la barre 2 pour courir le long du clavier tandis que ils peuvent répondre de façon rotative au trajet limité des avant-bras pour se rapprocher ou au contraire s'éloigner du clavier.

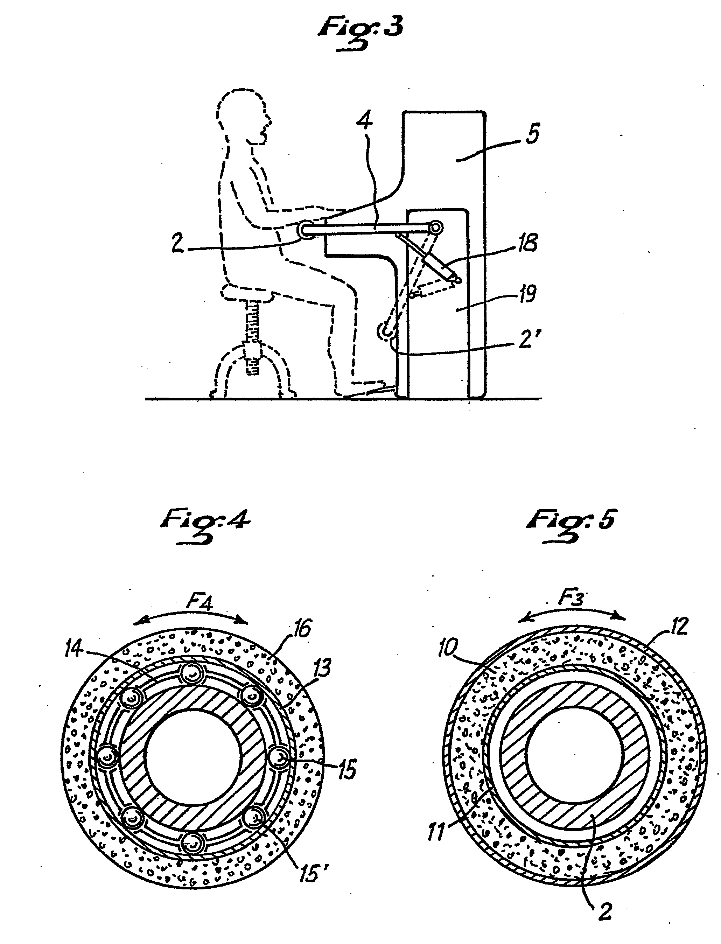

La figure 3 montre enfin une variante de réalisation dans laquelle la barre munie des coussinets ou des chariots représentés aux figures 4 et 5 comporte un dispositif d'effacement formé d'un vérin 18.

Ce vérin de type connu permet le repos et le maintien en position d'appui de la barre 2 tel qu'on le voit en traits pleins sur la figure; mais par simple relèvement de la barre vers le haut, assurant le déverrouillage du vérin, ce dernier peut être amené en position d'effacement par basculement vers le bas de la barre 2 tel qu'on le voit en traits pointillés sur la figure. Ce dispositif est du type connu utilisé notamment pour le maintien en position haute ou au contraire l'effacement après simple relèvement des hayons de voiture qui se relèvent selon un axe de pivotement horizontal.

L'invention se combine avantageusement à la mise en œuvre d'une méthode pédagogique adaptée à la pratique et à l'enseignement du piano pour adulte et tel qu'on l'a évoqué précédemment, visant à effacer tout effort intellectuel inutile et rébarbatif risquant, par l'interposition d'échecs semés sur la progression du sujet, d'engendrer une réaction négative amplifiée par les difficultés matérielles et liées au positionnement physique du sujet.

Le dispositif de l'invention n'est d'ailleurs pas limité à l'enseignement et à la pratique de débutant adulte; il peut être utilisé de façon suivie et systématique pour l'entraînement et l'exercice du piano pour des sujets déjà avancés et se situant à un haut niveau; il constitue en effet un instrument de contrôle du positionnement des avant-bras et des mains par rapport au clavier en permettant à l'exécutant de contrôler à tout moment les réflexes acquis et la bonne exécution des mouvements visant à les limiter aux doigts en vue de l'acquisition d'une vélocité maximum sur le plan digital et en restreignant en conséquence les déplacements des avant-bras ou de l'ensemble du bras qui risqueraient de parasiter l'acquisition de cette vélocité.

Diverses variantes de réalisation peuvent être envisagées à partir des éléments décrits. Ainsi on pourra avantageusement faire prendre appui aux deux branches latérales 4 et 4′ de la barre non sur les flancs du piano mais sur deux plaquettes 19 (fig. 1) latérales reposant sur le sol et immobilisées par rapport au piano; ces plaquettes peuvent encore prendre appui contre les parois du piano par une interface (matériau d'amortissement) évitant toute agression des surfaces laquées ou vernissées du piano.

Selon une variante le système de fixation de la barre 1 peut être dissimulé sous le clavier en prenant appui sur la paroi inférieure de la console supportant le clavier.

## Revendications

1. Dispositif stabilisateur des avant-bras en vue de l'assistance pour l'éducation et entraînement à la pratique du piano, du type constitué d'une surface longitudinale d'appui (1), disposé en porte-à-faux parallèlement et en deçà du clavier par rapport à l'exécutant, ladite surface étant apte à offrir un appui linéaire aux avant-bras lors de la manœuvre des touches par les doigts et, caractérisé en ce que la surface prend appui latéralement sur les deux flancs du corps du piano et elle est montée mobile et déplaçable angulairement entre une position active, elle-même préréglée de façon ajustable, parallèle et en avant du clavier, et une position d'effacement (2′) par rapport au clavier.

2. Dispositif selon la revendication 1, caractérisé en ce que la barre d'appui est montée mobile selon un mouvement angulaire de ses deux branches latérales (4, 4′) tourillonnées sur les flancs du clavier (5, 5′) et les moyens de fixation sont constitués de bielles de soutien constituées d'un vérin rétractable (18) et débloqué de sa position de soutien par simple relèvement de la barre.

3. Dispositif selon l'une des revendications 1 ou 2, caractérisé en ce que la barre d'appui est constituée d'un profilé notamment metallique en forme générale de U dont la base linéaire (2) rectiligne, constitue la partie longitudinale active positionnée parallèlement au clavier, les deux branches latérales (4, 4′) étant en appui sur les flancs (5, 5′ du piano par l'intermédiaire de moyens de fixation permettant le positionnement angulaire réglable de la barre (1) d'appui par rapport au clavier.

4. Dispositif selon l'une des revendications 1 à 3, caractérisé en ce que la barre constituée d'un profilé tubulaire cylindrique comporte deux coussinets (10, 10′) en forme de manchons eux-mêmes cylindriques montés coaxialement à coulissement sur la barre (2), chaque manchon étant apte à recevoir l'appui mobile d'un avant-bras du sujet.

5. Dispositif selon l'une des revendications 1 à 4, caractérisé en ce que la barre constitue un rail de préférence cylindrique à section circulaire et elle est porteuse de deux chariots (13) montés à coulissement et pourvus de moyens de déplacement tels que galets ou cages à billes (14) portant sur lesdits rails (2).

6. Dispositif selon l'une des revendications 1 à 5, caractérisé en ce que les moyens d'appui mobiles des avant-bras portés par la barre, tels que les coussinets ou chariot sont montés coulissant sur la barre d'une part selon un mouvement longitudinale le long de la barre et d'autre part à rotation angulaire selon l'axe constitué par ladite barre.

7. Dispositif selon l'une des revendications 1 à 6, caractérisé en ce que le rail ou barre en forme de U est porté par ses deux branches par deux montants (19) disposés à proximité et parallèlement aux flancs du piano.

## Claims

1. Device for supporting and stabilizing the forearms of a piano player, for the purpose of assisting learning and practising piano playing, of the type constituted by a longitudinal support surface (1) disposed in overhang parallel to the keyboard and between the latter and the player, said surface being adapted to offer a linear support for the forearms when the fingers are manoeuvring the keys, characterized in that the support surface abuts laterally on the two sides of the body of the piano and it is mounted to be angularly movable between an active position, itself pre-adjusted, parallel and in front of the keyboard, and a position of retraction (2′) with respect to the keyboard.

2. Device according to claim 1, characterized in that the support bar is mounted to move in an angular movement of its two lateral arms (4, 4′) pivoting on the sides of the piano (5, 5′) and the fastening means are constituted by supporting rods constituted by a retractable jack (18) unblocked from its position of support simply by raising the bar.

3. Device according to one of claims 1 or 2, characerized in that the support bar is constituted by a generally U-shaped profile notably in metal of which the rectilinear base (2) constitutes the active longitudinal part positioned parallel to the keyboard, the two lateral arms (4, 4′) being in abutment on the sides (5, 5′) of the piano via fastening means, allowing the adjustable angular positioning of the support bar (1) with respect to the keyboard.

4. Device according to one of claims 1 to 3, characterized in that the bar constituted by a cylindrical tubular profile comprises two bearings (10, 10′) in the form of sleeves, themselves cylindrical, mounted coaxially to slide on the bar (2), each sleeve being adapted to ensure the mobile support of a pupil's forearm.

5. Device according to one of claims 1 to 4, characterized in that the bar constitutes a rail, preferably cylindrical, of circular cross-section, and it bears two carriages (13) mounted to slide and provided with displacement means such as rollers or ball bearing cages (14) bearing on said rails (2).

6. Device according to one of claims 1 to 5, characterized in that the mobile means for supporting the forearms borne by the bar, such as bearings or carriage, are mounted to slide on the bar on the one hand in a longitudinal movement along the bar and, on the other hand, in angular rotation along the axis constituted by said bar.

7. Device according to one of claims 1 to 6, characterized in that the U-shaped bar or rail is borne by its two arms on two uprights (19) disposed in the vicinity of and parallel to the sides of the piano.

## Patentansprüche

1. Unterarmstabilisierungsgerät zum Unterstützen der Ausbildung und Übung im Klavierspiel, wobei das Gerät aus einer länglichen Auflagefläche (1) besteht, die freitragend parallel zum Klavier und diesseits desselben bezüglich des Klavierspielers angeordnet und geeignet ist, den Unterarmen bei der Betätigung der Tasten durch die Finger eine lineare Auflage zu bieten, dadurch gekennzeichnet, daß sich die Fläche seitlich an den zwei Flanken des Klavierkörpers abstützt und beweglich und um einen Winkel zwischen einer aktiven Stellung, die ihrerseits in einstellbarer Weise vorgegeben ist, parallel und vor dem Klavier und einer bezüglich des Klaviers weggeklappten Stellung (2′) verstellbar montiert ist.

2. Gerät nach Anspruch 1, dadurch gekennzeichnet, daß die Auflagestange für eine Winkelbewegung ihrer zwei Seitenarme (4, 4′) beweglich montiert ist, wobei diese an den Flanken (5, 5′) des Klaviers drehbar gelagert sind und die Befestigungsmittel aus Halteschwingen bestehen, die von einem zurückstellbaren Zylinder (18) gebildet sind, der aus seiner Haltestellung durch einfaches Anheben der Stange entblockiert wird.

3. Gerät nach einem der Ansprüche 1 oder 2, dadurch gekennzeichnet, daß die Auflagestange aus einem insbesondere aus Metall bestehenden Profil von im ganzen U-Form besteht, dessen gerade lineare Basis (2) den parallel zum Klavier angeordneten aktiven Längsabschnitt bildet, während die zwei seitlichen Arme (4, 4′) mittels Befestigungsmitteln an die Flanken (5, 5′) des Klaviers angedrückt werden, welche die Einstellung der Winkelstellung der Auflagestange (1) bezüglich des Klaviers ermöglichen.

4. Gerät nach einem der Ansprüche 1 bis 3, dadurch gekennzeichnet, daß die aus einem rohrförmigen zylindrischen Profil bestehende Stange zwei Kissen (10, 10′) in Form von ihrerseits zylindrischen Muffen trägt, die auf der Stange (2) koaxial verschiebbar montiert sind, wobei jede Muffe zum Aufnehmen der beweglichen Auflage eines Unterarms geeignet ist.

5. Gerät nach einem der Ansprüche 1 bis 4, dadurch gekennzeichnet, daß die Stange eine vorzugsweise zylindrische Schiene mit kreisförmigem Querschnitt bildet und zwei Wagen (13) trägt, die verschiebbar montiert und mit Verschiebungsmitteln, wie Rollen oder Kugelkäfigen (14) ausgerüstet sind, die sich auf der Schiene (2) abstützen.

6. Gerät nach einem der Ansprüche 1 bis 5, dadurch gekennzeichnet, daß die von der Stange getragenen beweglichen Auflagevorrichtungen für die Unterarme, wie Kissen oder Wagen, auf der Stange so verschiebbar montiert sind, daß sie einerseits längs der Stange eine Längsbewegung und andererseits um die von der Stange gebildete Achse eine Drehbewegung ausführen können.

7. Gerät nach einem der Ansprüche 1 bis 6, dadurch gekennzeichnet, daß die U-förmige Schiene oder Stange an ihren zwei Armen durch zwei Ständer (19) getragen ist, die in der Nähe und parallel zu den Flanken des Klaviers angeordnet sind.

*Fig:1*

EP 0 222 952 B1

# Fig. 2

EP 0 222 952 B1

*Fig.3*

*Fig.4*

*Fig.5*